Europäisches Patentamt

European Patent Office

Office européen des brevets

(11) Numéro de publication: **0 427 589 A1**

# DEMANDE DE BREVET EUROPEEN

(21) Numéro de dépôt: 90403034.3

(51) Int. Cl.5: **F16D 33/10**

(22) Date de dépôt: 26.10.90

(30) Priorité: 26.10.89 FR 8914039

(43) Date de publication de la demande:
15.05.91 Bulletin 91/20

(84) Etats contractants désignés:
DE GB IT

(71) Demandeur: SIME INDUSTRIE
Avenue de l'Europe
F-18150 La Guerche sur l'Aubois(FR)
(72) Inventeur: Levassort, Patrice
31 Rue de la Croix Saint Etienne
F-58000 Marzy(FR)
Inventeur: Eon, Christian
22 Rue des Sources
F-58640 Coulanges les Nevers(FR)

(74) Mandataire: CABINET BONNET-THIRION
95 Boulevard Beaumarchais
F-75003 Paris(FR)

(54) Coupleur hydrocinétique à limitation de couple améliorée au démarrage et surcouple réglable au ralentissement.

(57) Il s'agit d'un coupleur hydrocinétique comportant une chambre de retardement (20), qui s'étend dans un volume hors tout radialement inférieur à celui de son circuit de travail (15), et qui est reliée à celui-ci par au moins une voie de prélèvement (21) et au moins une voie de restitution (22).

Suivant l'invention, l'ouverture (25) de la voie de prélèvement (21) dans le circuit de travail (15) est disposée au droit de l'élément moteur (16A), à la périphérie de celui-ci, et il est associé à cette ouverture (25) au moins un déflecteur (26) qui, lié en rotation à l'élément moteur (16A), s'étend dans le circuit de travail (15) à compter d'elle et forme écope.

Application, notamment, à l'entraînement progressif de charges importantes susceptibles de surcharges temporaires.

FIG.1

## COUPLEUR HYDROCINÉTIQUE À LIMITATION DE COUPLE AMÉLIORÉE AU DÉMARRAGE ET SURCOUPLE RÉGLABLE AU RALENTISSEMENT

La présente invention concerne d'une manière générale les coupleurs hydrocinétiques.

Ainsi qu'on le sait, les coupleurs hydrocinétiques comportent, globalement, disposés en vis-à-vis dans un carter, deux éléments définissant entre eux un circuit de travail contenant un fluide, à savoir un élément moteur, qui forme pompe, et un élément récepteur, qui forme turbine.

Ainsi qu'on le sait, également, ils trouvent notamment leur application dans l'entraînement d'une charge, en étant interposés entre celle-ci et le moteur correspondant, et ils assurent, d'abord, une progressivité du démarrage de la charge, en ménageant ainsi le moteur, et, ensuite, une souplesse de fonctionnement pour l'ensemble.

En pratique, le couple de démarrage dépendant du niveau de remplissage initial du fluide dans le circuit de travail, il est prévu de doter ces coupleurs hydrocinétiques, pour en augmenter encore la progessivité d'intervention au démarrage, d'une chambre de retardement, qui, reliée au circuit de travail, est apte à limiter au démarrage la quantité de fluide effectivement présente dans ce circuit de travail, par dérivation temporaire d'une partie substantielle de ce fluide.

Le plus souvent, cette chambre de retardement est disposée dans un volume hors tout radialement inférieur à celui du circuit de travail, soit du côté de l'élément moteur, soit du côté de l'élément récepteur, et sa communication avec le circuit de travail comporte, de manière distincte, au moins une voie de prélèvement et au moins une voie de restitution, avec, sur la voie de restitution, pour la progressivité recherchée, au moins un ajutage calibré.

Ces dispositions donnent usuellement satisfaction.

Mais elles peuvent s'avérer insuffisantes dans le cas de l'entraînement de charges très lourdes et/ou de charges pouvant être brutalement l'objet de surcharges non négligeables, comme cela est par exemple le cas pour certaines bandes transporteuses ou autres convoyeurs.

Dans le brevet allemand DE-35 22 174, il est proposé, d'accroître encore les possibilités de progressivité et de souplesse dues au fluide de travail en prévoyant, en sus de la chambre de retardement précédente, une chambre de retardement supplémentaire, ou chambre périphérique, dont le volume hors tout s'étend radialement au-delà du circuit de travail, et qui, disposée du côté de l'élément récepteur, communique avec le circuit de travail par l'intervalle existant entre cet élément récepteur et l'élément moteur qui lui fait face.

Outre qu'une telle chambre de retardement supplémentaire conduit inévitablement à un accroissement de l'encombrement tant radial qu'axial de l'ensemble, les conditions suivant lesquelles elle communique avec le circuit de travail sont malaisées à maîtriser, au détriment de son efficacité.

La présente invention a d'une manière générale pour objet une disposition permettant d'accroître l'efficacité d'une chambre de retardement de type usuel, sans qu'il soit nécessaire de lui adjoindre une chambre de retardement supplémentaire, et conduisant en outre à d'autres avantages.

De manière plus précise, elle a pour objet un coupleur hydrocinétique du genre comportant, d'une part, disposés en vis-à-vis dans un carter, deux éléments définissant entre eux un circuit de travail contenant un fluide, à savoir un élément moteur, qui forme pompe, et un élément récepteur, qui forme turbine, et, d'autre part, reliée audit circuit de travail, une chambre de retardement apte à limiter au démarrage la quantité de fluide effectivement présente dans ce circuit de travail, la communication de ladite chambre de retardement avec ledit circuit de travail comportant, de manière distincte, au moins une voie de prélèvement et au moins une voie de restitution, ce coupleur hydrocinétique étant d'une manière générale caractérisé en ce que l'ouverture de la voie de prélèvement dans le circuit de travail est disposée au droit de l'élément moteur, à la périphérie de celui-ci, et en ce qu'il est associé à cette ouverture au moins un déflecteur, qui, lié en rotation à l'élément moteur, s'étend dans le circuit de travail à compter d'elle et forme écope.

Grâce à un tel déflecteur formant écope, il est judicieusement tiré parti de l'énergie cinétique du circuit de travail due à la vitesse de l'anneau de fluide, ou vortex, circulant dans celui-ci.

Cette énergie cinétique est récupérée sous la forme d'un accroissement du débit de fluide dérivé en direction de la chambre de retardement, au bénéfice de l'efficacité de celle-ci.

De ce fait, la chambre de retardement mise en oeuvre peut avantageusement être, si désiré, une chambre de retardement s'étendant, radialement, de manière usuelle, dans un volume hors tout inférieur à celui du circuit de travail.

Certes, il est connu, par le document FR-A-2.087.138, un coupleur hydrocinétique dans lequel interviennent plusieurs passages entre le volume de travail et une chambre de réserve, et comportant un déflecteur.

Mais le passage formant voie de prélèvement y intervient au centre, et ce n'est pas à son ouverture qu'est associé le déflecteur.

C'est au contraire le passage formant voie de restitution dont l'ouverture est au droit de ce déflecteur.

Quant à un autre passage, qui se trouve aussi sensiblement au droit du déflecteur, il concerne une circulation d'air.

Il est en outre à souligner que, dans ce document FR-A-2.087.138, le prélèvement intervient sous les effets de la force centrifuge, et non pas sous les effets du vortex, et dans une zone de dépression, alors que, suivant la présente demande, ce prélèvement intervient dans une zone de pression créée par le déflecteur.

Les conditions de travail sont donc, dans l'un et l'autre cas, totalement différentes.

Selon un perfectionnement de l'invention, le déflecteur formant écope est réglable en position, ce qui permet une modulation du débit de fluide dérivé par la voie de prélèvement.

Selon un autre perfectionnement de l'invention, il est prévu, sur cette voie de prélèvement, une valve permettant de régler, si désiré, le temps au cours duquel le circuit de travail est ainsi au moins partiellement déchargé de fluide.

Par exemple, durant une première phase, ou phase de démarrage, cette valve reste ouverte, et la quantité de fluide présente dans le circuit de travail se trouve, alors, de manière usuelle, diminuée d'une proportion déterminée.

Le couple transmissible par le coupleur s'en trouve limité d'autant, au bénéfice de la progressivité recherchée.

Au terme de cette phase de démarrage, la valve se ferme.

Mais elle s'ouvre à nouveau lors d'un ralentissement, pour une nouvelle limitation du couple transmissible.

En particulier, en cas de surcharge temporaire, la puissance absorbée se trouve ainsi diminuée jusqu'au retour des conditions de charge nominale initiales, ce qui autorise avantageusement un surcroît de travail passager sans risque de dommage pour le moteur.

Les caractéristiques et avantages de l'invention ressortiront d'ailleurs de la description qui va suivre, à titre d'exemple, en référence aux dessins schématiques annexés sur lesquels :

la figure 1 est une demi-vue en coupe axiale d'un coupleur hydrocinétique suivant l'invention ;

la figure 2 est, à échelle supérieure, une vue en coupe axiale d'une valve intervenant sur la voie de prélèvement associée au circuit de travail de ce coupleur hydrocinétique ;

la figure 3 est un bloc diagramme illustrant son fonctionnement.

Tel qu'illustré sur ces figures, et de manière connue en soi, le coupleur hydrocinétique suivant l'invention comporte, globalement, un carter annulaire 10, qui, formé, principalement, de deux coquilles 10A, 10B dûment affrontées l'une à l'autre suivant un plan de joint transversal 11 et dûment solidarisées l'une à l'autre, est traversé, axialement, par un arbre creux 12, avec interposition de moyens de roulement 13.

L'arbre 12 est destiné à être calé en rotation sur l'arbre d'entrée de la machine à entraîner, non représentée, tandis que le carter 10 est destiné à être calé en rotation sur l'arbre de sortie du moteur correspondant, également non représenté.

Dans le carter 10 sont disposés, en vis-à-vis, deux éléments définissant entre eux un circuit de travail globalement torique 15 destiné à contenir un fluide non représenté, à savoir un élément moteur 16A, qui, solidaire du carter 10, forme pompe, et un élément récepteur 16B, qui, solidaire de l'arbre 12, forme turbine.

Il s'agit, dans l'un et l'autre cas, de roues à aubes.

Soit 17A les aubes de l'élément moteur 16A, et 17B celles de l'élément récepteur 16B.

En pratique, l'élément moteur 16A fait corps avec la coquille 10A du carter 10, ses aubes 17A étant directement portées par cette dernière.

Il n'en est bien évidemment pas de même pour l'élément récepteur 16B, qui, à l'intérieur de la coquille 10B du carter 10, présente une coquille spécifique 18 pour le support de ses aubes 17B.

Le coupleur hydrocinétique suivant l'invention comporte, en outre, reliée au circuit de travail 15, une chambre de retardement 20 apte à limiter au démarrage la quantité de fluide effectivement présente dans ce circuit de travail 15.

Dans la forme de réalisation représentée, cette chambre de retardement 20 est disposée du côté de l'élément récepteur 16B, à proximité de l'arbre 12.

Elle est formée au dos de la coquille 10B du carter 10, entre cette coquille 10B et une coquille 10'B affrontée par un plan de joint transversal 11' à celle-ci et dûment solidarisée à elle.

Globalement, cette chambre de retardement 20 s'étend dans un volume hors tout qui, radialement, est inférieur à celui du circuit de travail 15.

Autrement dit, le rayon R de la circonférence dans laquelle s'inscrit le circuit de travail 15 est largement supérieur à celui R' de la circonférence dans laquelle s'inscrit la chambre de retardement 20.

De manière connue en soi, enfin, la communication de la chambre de retardement 20 avec le circuit de travail 15 comporte, de manière distincte, au moins une voie de prélèvement 21 et au moins une voie de restitution 22.

Dans la forme de réalisation représentée, la voie de restitution 22 comporte un canal 23, qui, à compter de la chambre de retardement 20, s'étend dans l'épaisseur de la coquille 10B du carter 10, en direction de la périphérie de celui-ci, et un ajutage calibré 24, qui fait communiquer ce canal 23 avec l'espace s'étendant entre cette coquille 10B du carter 10 et la coquille 18 de l'élément récepteur 16B, et, par cet espace, et par l'intervalle existant entre l'élément récepteur 16B et l'élément moteur 16A, avec le circuit de travail 15.

Suivant l'invention, l'ouverture 25 de la voie de prélèvement 21 dans le circuit de travail 15 est disposée au droit de l'élément moteur 16A, à la périphérie de celui-ci, et il est associé à cette ouverture 25 au moins un déflecteur 26, qui, lié en rotation à cet élément moteur 16A, s'étend dans le circuit de travail 15 à compter d'elle et forme écope.

En pratique, et tel que représenté, ce déflecteur 26 s'étend en biais dans le volume interne de l'élément moteur 16A, entre deux aubes 17A de celui-ci.

De préférence, il est réglable en position.

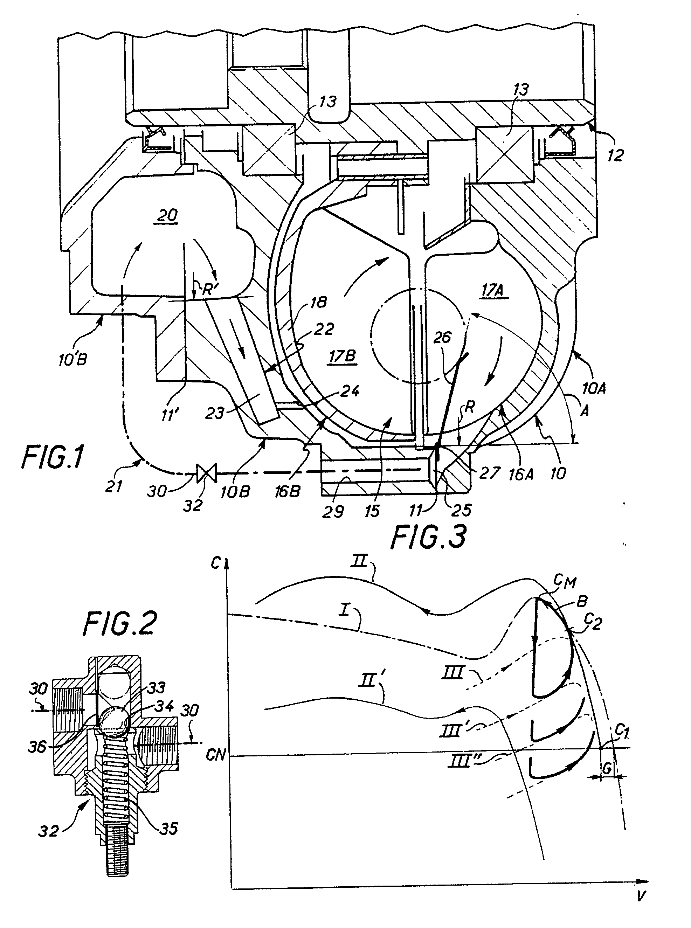

Par exemple, et tel que schématisé sur la figure 1, il peut être monté pivotant sur le carter 10, et, plus précisément, sur l'une ou l'autre des coquilles 10A, 10B de celui-ci, autour d'un axe 27, qui, disposé sensiblement suivant le plan de joint transversal 11 entre ces coquilles 10A, 10, s'étend tangentiellement par rapport à la circonférence correspondante, et, donc, perpendiculairement au plan de cette figure 1.

Il est possible ainsi de faire varier l'angle d'ouverture A de ce déflecteur 26, c'est-à-dire l'angle qu'il fait avec le plan qui, contenant son axe 27, est parallèle à l'axe de l'ensemble.

Par exemple, le déflecteur 26 peut être soumis, pour ce faire, à une commande centrifuge, non représentée.

En variante, et de manière également non représentée, il peut être soumis à une commande extérieure au carter 10, et par exemple à une commande magnétique.

Dans la forme de réalisation représentée, la voie de prélèvement 21 s'étend pour partie dans le carter 10, et pour partie à l'extérieur de celui-ci.

Plus précisément, elle comporte, dans cette forme de réalisation, à compter de l'ouverture 25, un canal 29, qui, pratiqué dans le carter 10, dans la zone périphérique de ce carter 10, radialement au-delà de l'élément récepteur 16B, s'étend sensiblement perpendiculairement au plan de joint 11 des coquilles 10A, 10B de ce carter 10, et, donc, sensiblement parallèlement à l'axe de l'ensemble.

Elle comporte, en outre, à l'extérieur du carter 10, une canalisation 30 raccordant à la chambre de retardement 20 le canal 29 précédent.

Sur la figure 1, cette canalisation 30 n'a été que schématisée par un trait interrompu.

De préférence, il est prévu, sur la voie de prélèvement 21 ainsi constituée, une valve 32.

Dans la forme de réalisation représentée, cette valve 32 est à l'extérieur du carter 10.

Elle intervient donc sur la canalisation 30.

Si désiré, il peut s'agir d'une valve pilotée.

C'est le cas, dans la forme de réalisation représentée, figure 2, suivant laquelle la valve 32, qui, par exemple, est simplement portée par la canalisation 30, est une valve centrifuge.

Par exemple, et tel que représenté, le clapet 33 de cette valve 32, qui est formé d'une simple bille, et auquel est associé un siège de clapet 34 interposé sur la canalisation 30, est soumis à un ressort 35 qui le sollicite radialement en direction de l'axe de l'ensemble, à l'opposé du siège de clapet 34, cependant qu'une goupille 36, traversant le débouché correspondant de la canalisation 30, en assure la retenue par rapport à celle-ci.

En variante, et suivant des dispositions qui, ne relevant pas de la présente invention, ne seront pas décrites en détail ici, les moyens de commande de cette valve 32 peuvent par exemple être des moyens électromagnétiques, ou des moyens pilotés par un fusible thermique, étant souligné que ces moyens de commande sont d'autant plus aisés à mettre en oeuvre que, suivant l'invention, cette valve 32 est disposée à l'extérieur du carter 10.

Dans tous les cas, la valve 32 est ouverte au repos, et le volume de la chambre de retardement 20 est suffisant pour lui permettre de recueillir tout ou partie du fluide se trouvant dans le circuit de travail 15.

Sur le diagramme de la figure 3, on a reporté, en abscisses, la vitesse de rotation, et, en ordonnées, le couple.

Soit CN le couple nominal résistant, et G le glissement.

La courbe I, en traits interrompus, correspond au couple moteur.

Les courbes II et II′, en traits continus, correspondent au couple rétro du coupleur lors d'un ralentissement, la première, la courbe II, lorsque la valve 32 est fermée, et la deuxième, la courbe II′, lorsque cette valve 32 est ouverte.

Les courbes III, III′, III″ etc..., en pointillés, correspondent, elles, au couple de démarrage du coupleur, pour différentes valeurs de son remplissage.

Au démarrage, la valve 32 se ferme relativement rapidement, figure 2, et, au fur et à mesure de l'élévation de la vitesse, le couple transmis par le coupleur suit la courbe de démarrage III, III′, III″ etc..., correspondant à son remplissage.

En pratique, la fermeture de la valve 32 n'est cependant pas instantanée.

Au cours de la phase de démarrage transitoire correspondante, elle est donc encore à l'origine d'une fuite interne de fluide de travail.

L'expérience montre, en tout cas, qu'avec une chambre de retardement 20, desservie comme il a été décrit, il est observé un démarrage avantageusement plus progressif qu'avec une chambre de retardement classique de même capacité.

Dans le cas d'une surcharge, et à partir du point C1 correspondant au couple nominal résistant CN, la vitesse diminue, et le couple transmis, qui augmente, suit d'abord la courbe de rétro II, jusqu'au point C2 où celle-ci recoupe la courbe I du moteur.

A compter de ce point C2, il suit la courbe I jusqu'au point CM considéré comme correspondant au couple maximal admissible.

A ce point CM, la valve 32 s'ouvre.

Grâce au déflecteur 26 faisant écope suivant l'invention, il y a alors une vidange partielle brutale du circuit de travail 15 vers la chambre de retardement 20, et donc un abaissement brutal du couple transmis.

Il en résulte une remontée de vitesse du moteur, et, lorsque la valve 32 se ferme, une reprise d'un cycle de démarrage, suivant la courbe III, III', III'' etc... atteinte.

Si, dans l'intervalle, le surcouple a été éliminé, le couple transmis atteint à nouveau le point C1.

Dans la négative, il y a itération du processus précédent, suivant une boucle fermée B du type de celle tracée en trait appuyé sur la figure 2.

L'expérience montre, en tout cas, que, avec la chambre de retardement 20 desservie comme il a été décrit, le surcouple alors possible est avantageusement plus élevé qu'avec une chambre de retardement classique de même capacité.

En particulier, le coupleur hydrocinétique suivant l'invention est ainsi avantageusement à même de suivre au mieux les caractéristiques d'un moteur présentant en pointe un couple quatre à cinq fois supérieur au couple nominal, comme cela est par exemple le cas de certains moteurs blindés de diamètre relativement petit mais d'axe relativement long.

Par intervention sur la valve 32 et/ou sur le déflecteur 26 faisant écope, des réglages sont par ailleurs possibles.

Bien entendu, la présente invention ne se limite pas à la forme de réalisation décrite et représentée, mais englobe toute variante d'exécution.

Il va de soi en outre que, au lieu d'être appliquée, comme plus particulièrement décrit et représenté, à une chambre de retardement s'étendant, radialement, dans un volume hors tout inférieur à celui du circuit de travail, elle peut aussi bien être appliquée à une chambre périphérique.

## Revendications

1. Coupleur hydrocinétique du genre comportant, d'une part, disposés en vis-à-vis dans un carter (10), deux éléments définissant entre eux un circuit de travail (15) contenant un fluide, à savoir un élément moteur (16A), qui forme pompe, et un élément récepteur (16B), qui forme turbine, et, d'autre part, reliée audit circuit de travail (15), une chambre de retardement (20) apte à limiter au démarrage la quantité de fluide effectivement présente dans ce circuit de travail (15), la communication de ladite chambre de retardement (20) avec ledit circuit de travail (15) comportant, de manière distincte, au moins une voie de prélèvement (21), et au moins une voie de restitution (22), caractérisé en ce que l'ouverture (25) de la voie de prélèvement (21) dans le circuit de travail (15) est disposée au droit de l'élément moteur (16A), à la périphérie de celui-ci, et il est associé à cette ouverture (25) au moins un déflecteur (26), qui, lié en rotation à l'élément moteur (16A), s'étend dans le circuit de travail (15) à compter d'elle et forme écope.

2. Coupleur hydrocinétique suivant la revendication 1, caractérisé en ce que le déflecteur (26) s'étend en biais dans le volume interne de l'élément moteur (16A), entre deux aubes (17A) de celui-ci.

3. Coupleur hydrocinétique suivant l'une quelconque des revendications 1, 2, caractérisé en ce que le déflecteur (26) est réglable en position.

4. Coupleur hydrocinétique suivant l'une quelconque des revendications 1 à 3, caractérisé en ce qu'il est prévu, sur la voie de prélèvement (21), une valve (32).

5. Coupleur hydrocinétique suivant la revendication 4, caractérisé en ce que ladite valve (32) est pilotée.

6. Coupleur hydrocinétique suivant l'une quelconque des revendications 4, 5, caractérisé en ce que la voie de prélèvement (21) s'étend au moins pour partie dans le carter (10) et au moins pour partie à l'extérieur de celui-ci, et la valve (32) qu'elle comporte est à l'extérieur du carter (10).

7. Coupleur hydrocinétique suivant l'une quelconque des revendications 1 à 6, caractérisé en ce que la chambre de retardement (20) s'étend radialement dans un volume hors tout inférieur à celui du circuit de travail (15).

EP 0 427 589 A1

FIG.1

FIG.2

FIG.3

6

Office européen
des brevets

# RAPPORT DE RECHERCHE EUROPEENNE

Numéro de la demande

**EP 90 40 3034**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X,D,A | FR-A-2 087 138  (FERODO)<br>* pages 3 - 6; figures 1-4 *<br>— — — | 1,7,2,4 | F 16 D 33/10 |
| A | FR-A-1 545 621  (FLUID DRIVE GEARS LIMITED)<br>* pages 2 - 3; figure 2 *<br>— — — | 1,2,4,5 | |
| A | US-A-3 955 368  (JOHN E. BECKER)<br>* colonnes 2 - 3; figures 1-2 *<br>— — — | 1-4 | |
| D,A | DE-C-3 522 174  (VOITH-TURBO GMBH & CO KG)<br>* figure 1 *<br>— — — — — | 1,7 | |

| | DOMAINES TECHNIQUES RECHERCHES (Int. Cl.5) |
|---|---|
| | F 16 D<br>F 16 H |

Le présent rapport de recherche a été établi pour toutes les revendications

| Lieu de la recherche | Date d'achèvement de la recherche | Examinateur |
|---|---|---|
| La Haye | 20 février 91 | FLORES E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

&: membre de la même famille, document correspondant